# EUROPEAN PATENT APPLICATION

(11) **EP 3 716 116 A1**
(43) Date of publication of application: **30.09.2020**
(21) Application number: 20165388.8
(22) Date of filing: 24.03.2020
(51) Int. Cl.: G06F 21/57

(54) **TEST SCENARIO GENERATION DEVICE, TEST SCENARIO GENERATION METHOD AND TEST SCENARIO GENERATION PROGRAM**

(30) Priority: 25.03.2019 JP 2019057245
(71) Applicant: Clarion Co., Ltd., Saitama-shi, Saitama 330-0081 (JP)
(72) Inventor: SATO, Chinatsu, Chiyoda-ku, Tokyo 1008280 (JP); KAWAUCHI, Takeshi, Chiyoda-ku, Tokyo 1008280 (JP); CHEN, Yiwen, Chiyoda-ku, Tokyo 1008280 (JP); NAGAI, Yasushi, Saitama-shi, Saitama 330-0081 (JP)
(74) Representative: Mewburn Ellis LLP

(57) **Abstract**

The test scenario generation device of this invention is a test scenario generation device which generates a test scenario related to an attack against an in-vehicle device, comprising a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities, an assignment unit which creates attack classification information, which has identified the attack classification of each of the constituent elements, by using the hierarchy information, the vulnerability information, and the attack classification information, and a scenario creation unit which generates an entry route up to each of the constituent elements as the assets based on the element connection, and generates a plurality of test scenarios in which a combination of the constituent elements and the attack classification is arranged in an order of the entry routes by using the attack classification information.

## Description

### TECHNICAL FIELD

The present invention generally relates to a test scenario generation device, a test scenario generation method, and a test scenario generation program.

### BACKGROUND ART

In recent years, the technology of realizing driving assistance and automatic driving of vehicles by acquiring various types of information from external information communication devices is becoming widespread in an in-vehicle communication system equipped with a plurality of electronic control devices. With this kind of in-vehicle communication system, the risk of encountering a cyberattack from the outside is increasing, and improvement in security performance is being demanded. Meanwhile, software configuring such devices sometimes contain a defect referred to as software vulnerability (hereinafter simply referred to as "vulnerability"), such as bugs or problems with the specification of the computer program.

In order to confirm the resistance and countermeasures against cyberattacks to an in-vehicle communication system, device manufacturers that developed the in-vehicle communication system and manufacturers that ordered such in-vehicle communication system perform tests such as fuzzing tests and penetration tests. The test scenarios of security against attacks in the system tests of device manufacturers need to be created based on the product design specification and requirements and by anticipating the security attacks.

Nevertheless, when designing the tests by anticipating the security attacks, if such design is based on the designer's know-how related to security and attacks, the test design will be dependent on the ability of the designer, and there was a problem in that a designer, who has sophisticated security knowledge, is required. In order to overcome the foregoing problem, a technique of creating a test program by giving consideration to both the product specification and security attack is disclosed, for example, in PTL 1.

PTL 1 discloses a test program of causing a computer to execute a security test, wherein the test program causes a computer capable of accessing a database which associates and stores security attack classification, test procedure information as information defining procedures of a test corresponding to the security attack classification, and success condition information as information defining a test success condition corresponding to the test procedure to function as a designation means which receives the security attack classification and a designation of an attack target, an identification means which refers to the database and identifies the test procedure information corresponding to the received security attack classification, and an execution means which executes a test to the received attack target based on the identified test procedure information, and determines whether the test was successful based on the success condition information corresponding to the received security attack classification.

### CITATION LIST

### PATENT LITERATURE

[PTL 1] Japanese Unexamined Patent Application Publication No. 2011-86201

### SUMMARY OF THE INVENTION

### PROBLEMS TO BE SOLVED BY THE INVENTION

With the invention described in PTL 1, it is difficult to create exhaustive test cases that are compatible with attacks which combine the vulnerability of configurations and functions.

### MEANS TO SOLVE THE PROBLEMS

The test scenario generation device according to the first mode of the present invention is a test scenario generation device which generates a test scenario related to an attack against an in-vehicle device, comprising: a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities; an assignment unit which creates attack classification information, which has identified the attack classification of each of the constituent elements, by using the hierarchy information, the vulnerability information, and the attack classification information; and a scenario creation unit which generates an entry route up to each of the constituent elements as the assets based on the element connection, and generates a plurality of test scenarios in which a combination of the constituent elements and the attack classification is arranged in an order of the entry routes by using the attack classification information.
The test scenario generation method according to the second mode of the present invention is a test scenario generation method in which a test scenario generation device comprising a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities generates a test scenario related to an attack against the in-vehicle device, comprising the steps of: creating the attack classification information, which has identified the attack classification of each of the constituent elements, by using the hierarchy information, the vulnerability information, and the attack classification information; and generating an entry route up to each of the constituent elements as the assets based on the element connection, and generating a plurality of test scenarios in which a combination of the constituent elements and the attack classification is arranged in an order of the entry routes by using the attack classification information.
The test scenario generation program according to the third mode of the present invention is a test scenario generation program which causes a test scenario generation device comprising a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities to generate a test scenario related to an attack against the in-vehicle device, wherein the test scenario generation program causes the test scenario generation device to: create the attack classification information, which has identified the attack classification of each of the constituent elements, by using the hierarchy information, the vulnerability information, and the attack classification information; and generate an entry route up to each of the constituent elements as the assets based on the element connection, and generate a plurality of test scenarios in which a combination of the constituent elements and the attack classification is arranged in an order of the entry routes by using the attack classification information.

### ADVANTAGEOUS EFFECTS OF THE INVENTION

According to the present invention, it is possible to create exhaustive test cases that are compatible with attacks which combine the vulnerability of configurations and functions.

### BRIEF DESCRIPTION OF DRAWINGS

Fig. 1 is a configuration diagram of the test scenario generation system.
Fig. 2 is a diagram showing the hardware configuration of the test scenario generation device 1, the administrator terminal 2 and the configuration management DB 3.
Fig. 3 is a functional configuration diagram of the test scenario generation device 1.
Fig. 4 is a diagram showing an example of the hierarchy information 500.
Fig. 5 is a diagram showing an example of the element connection 510.
Fig. 6 is a diagram showing an example of the vulnerability information 600.
Fig. 7 is a diagram showing an example of the attack classification information 700.
Fig. 8 is a diagram showing an example of the vulnerability countermeasure information 710.
Fig. 9 is a diagram showing an example of the scenario pattern information 800.
Fig. 10 is a diagram showing an example of the attack classification information 900.
Fig. 11 is a diagram showing an example of the attack route information 1100.
Fig. 12 is a diagram showing an example of the test scenario output result 1200.
Fig. 13 is a diagram showing an example of the test scenario priority evaluation result 1300.
Fig. 14 is a diagram showing an example of the redundant test scenario determination result 1400.
Fig. 15 is a processing sequence diagram of the test scenario generation device 1 and the administrator terminal 2.
Fig. 16 is a flowchart showing the details of step S404 of Fig. 15.
Fig. 17 is a diagram showing an example of the vulnerability information 600A in modified example 3.

### DESCRIPTION OF EMBODIMENTS

### -Embodiments-

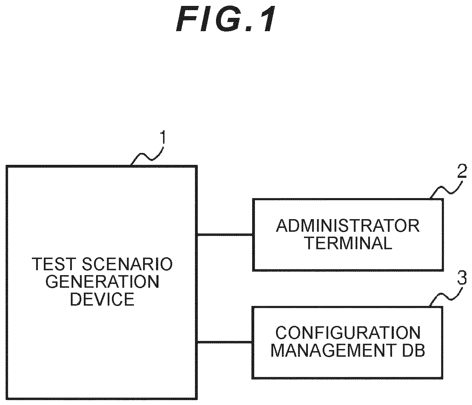

An embodiment of the test scenario generation device according to the present invention is now explained with reference to Fig. 1 to Fig. 15. In this embodiment, on the assumption that a certain in-vehicle device will encounter an attack, various anticipated situations are created as "test scenarios". By creating individual test scenarios in advance for all of the anticipated situations and providing the created test scenarios to the user, precautions can be taken. In this embodiment, information assets as data retained in an in-vehicle device that will encounter an attack, such as exploitation of information, from an attacker, and functional assets that perform the various types of processing of the in-vehicle device that will encounter a disabling attack, such as DoS, from an attacker, are collectively referred to as "asset information".

Fig. 1 is a configuration diagram of a test scenario generation system S according to an embodiment of the present invention. The test scenario generation system S is configured by including a test scenario generation device 1, an administrator terminal 2, and a management database 3. However, the configuration shown in Fig. 1 is merely an example, and it will suffice so as long the functions and information equipped in the respective devices described later are included in the test scenario generation system S, and the number of devices configuring the test scenario generation system S is not limited to three devices.

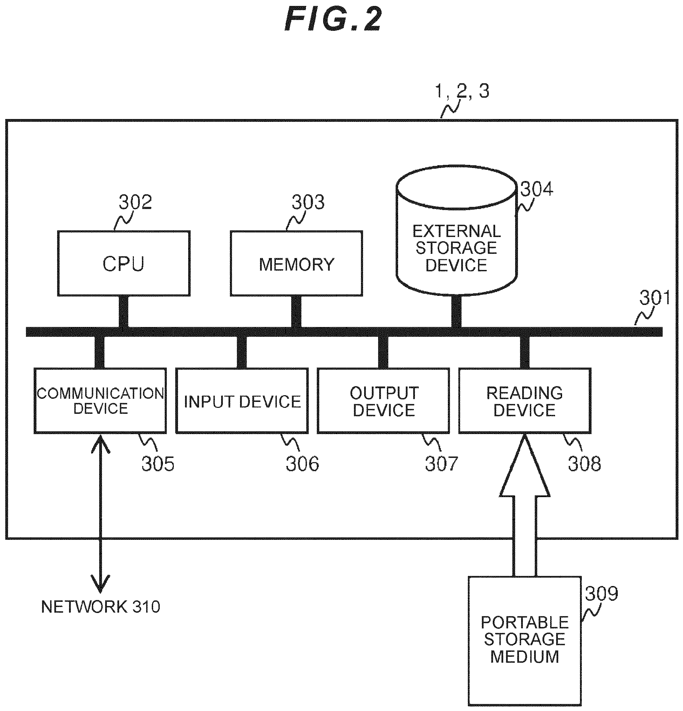

Fig. 2 is a diagram showing the hardware configuration of the test scenario generation device 1, the administrator terminal 2 and the configuration management DB 3. As these three devices substantially have the same hardware configuration, they will be collectively explained. However, the hardware configurations of the test scenario generation device 1, the administrator terminal 2 and the configuration management DB 3 do not need to completely coincide, and may be suitably changed.

The test scenario generation device 1, the administrator terminal 2 and the configuration management DB 3 comprise a CPU (Central Processing Unit) 302 which performs various types of processing and computation and controls the overall computer, a memory 303 as a volatile storage area, an external storage device 304 such as a hard disk which stores various types of programs and data, a communication device 305 for communicating with other computers via a network 310, an input device 306 such as a keyboard or a button, an output device 307 such as a monitor or a printer, a reading device 308 which reads information from a portable storage medium 309 such as a CD-ROM or a USB, and an internal communication line (for example, BUS) 301 which exchanges data between the respective computers. The test scenario generation device 1, the administrator terminal 2 and the configuration management DB 3 are so-called general-purpose computers (electronic computers).

The CPU 302 realizes the functions described later by loading various types of programs from the external storage device 304 into the memory 303, and executing predetermined programs. The programs to be executed by the CPU 302 may be stored in the external storage device 304 in advance, or may be stored in the portable storage medium 309 that can be used by an electronic computer and read as needed via the reading device 308. Moreover, the programs to be executed by the CPU 302 may also be downloaded as needed from another computer connected to the communication device 305 which uses a network as a communication medium that can be used by an electronic computer or carrier waves that are transmitted on such network, and then stored in the external storage device 304.

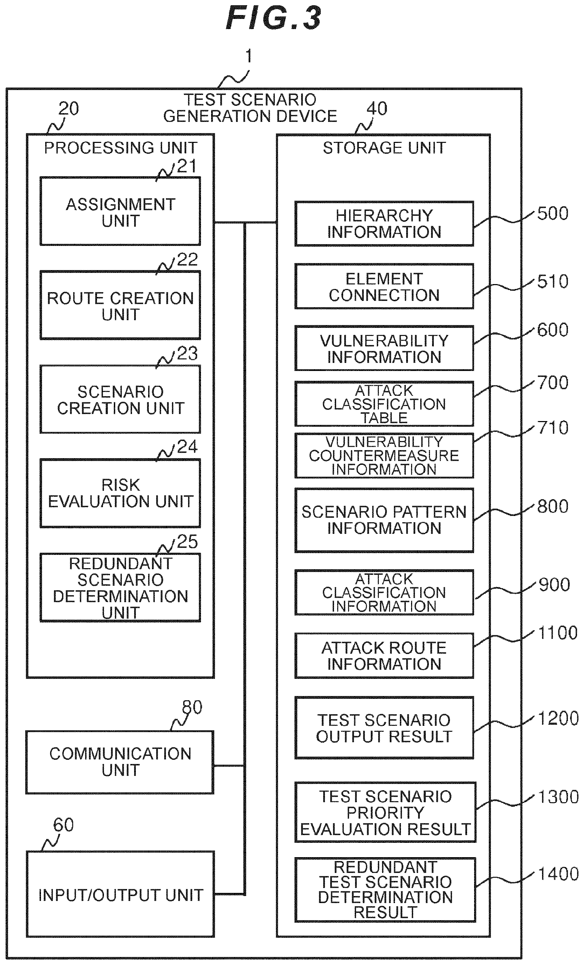

Fig. 3 is a functional configuration diagram of the test scenario generation device 1. The test scenario generation device 1 comprises a processing unit 20, a storage unit 40, an input/output unit 60 which receives instructions from the operator or performs the input/output of various types of data or outputs processing results, and a communication unit 80 which communicates via a network. To explain the relationship of Fig. 3 and Fig. 2, the processing unit 20 is realized as a processing process of the CPU 302, and the storage unit 40 is realized by the CPU 302 using the memory 303 and the external storage device 304. Moreover, the communication unit 80 is realized by the CPU 302 using the communication device 305, and the input/output unit 60 is realized by the CPU 302 using the input device 306, the output device 307 and the reading device 308.

The processing unit 20 includes an assignment unit 21, a route creation unit 22, a scenario creation unit 23, a risk evaluation unit 24, and a redundant scenario determination unit 25. The storage unit 40 stores hierarchy information 500, attack classification information 900, vulnerability information 600, attack classification information 700, vulnerability countermeasure information 710, scenario pattern information 800, attack route information 1100, test scenario output result 1200, test scenario priority evaluation result 1300, and redundant test scenario determination result 1400, all described later.

The assignment unit 21 creates the attack classification information 900 by using the vulnerability information 600, the attack classification information 700, and the vulnerability countermeasure information 710, and stores the created attack classification information 900 in the storage unit 40. The route creation unit 22 refers to the hierarchy information 500 and creates the attack route information 1100, and further refers to the hierarchy information 500 and the attack classification information 900 and creates the attack route information 1100, and stores the created attack route information 1100 in the storage unit 40. The scenario creation unit 23 refers to the attack route information 1100 and the scenario pattern information 800 and creates the test scenario output result 1200, and stores the created test scenario output result 1200 in the storage unit 40.

The risk evaluation unit 24 calculates the evaluation value of each test scenario in response to the test scenario output result 1200, and then creates the test scenario priority evaluation result 1300. The redundant scenario determination unit 25 creates the redundant test scenario determination result 1400 for detecting the same scenario parts in response to the test scenario output result 1200 and streamlining the tests by reducing the patterns to be confirmed during the test design.

### (Hierarchy information 500)

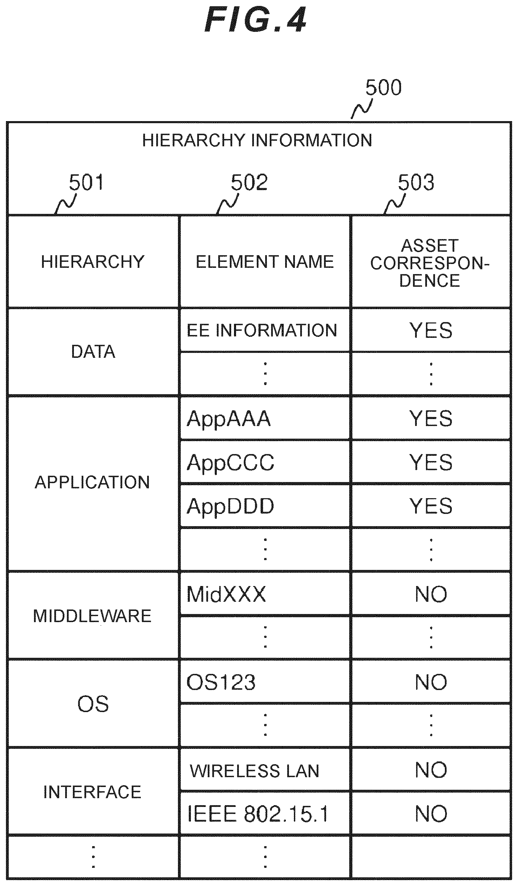

Fig. 4 is a diagram showing an example of the hierarchy information 500. The hierarchy information 500 is information that is created in advance, and stored in the storage unit 40 at the start of processing. Note that the hierarchy information 500 may also be input from the configuration management DB 3, but in the least it is temporarily stored in the memory 303 of the test scenario generation device 1.

The hierarchy information 500 is configured from a plurality of records, and each record has the fields of hierarchy 501, element name 502, and asset correspondence 503. The hierarchy 501 indicates a physical, network-based or conceptual distance of the constituent elements. The hierarchy 501 is a category, for example, based on a configuration layer, a network configuration, or a cyber kill chain. So as long as it is information capable of expressing the distance of the constituent elements to the assets, there is no particular limitation regarding the method of expression thereof. In the example shown in Fig. 4, the hierarchy 501 indicates that, as the constituent element is closer to the top of the diagram, such constituent element is closer to the inside of the test scenario generation device 1, and, as the constituent element is closer to the bottom of the diagram, such constituent element is closer to the outside of the test scenario generation device 1. In other words, the "interface" is on the outermost side of the test scenario generation device 1. While this will be explained in detail later, because an attack begins from the outside of the test scenario generation device 1, all attacks begin from the element in which the hierarchy 501 is "interface". Moreover, an attack advances from the outside to the inside, and passes through each hierarchy in order.

The element name 502 is the name of each constituent element, and is the specific product name, software name, function name, interface name, element technology name, or data name of the constituent elements. While each value of the element name 502 has a function as a label, it does not have any special meaning like the hierarchy 501 in this embodiment. When using a product name or a software name as the element name 502, because the vulnerability information will have a different relation depending on the version of the software, detailed version information may also be included. The asset correspondence 503 indicates whether that element corresponds to an asset. In the example shown in Fig. 4, the asset correspondence 503 stores "YES" when the element corresponds to an asset, and stores "NO" when the element does not correspond to an asset. However, it will suffice so as long as it is possible to determine whether the element corresponds to an asset, and the manner of indication or expression is arbitrary.

For example, in the example shown in the uppermost part of Fig. 4, the hierarchy 501is "data", the element name 502 is "EE information", and the asset correspondence 503 is "YES". Thus, it can be understood that "EE information" is an asset and belongs to the hierarchy of "data" on the innermost side. Moreover, it can be understood that "OS 123" shown in the middle part of Fig. 4 is the "OS" in which the hierarchy is the second from the outside, and is not an asset.

### (Element connection 510)

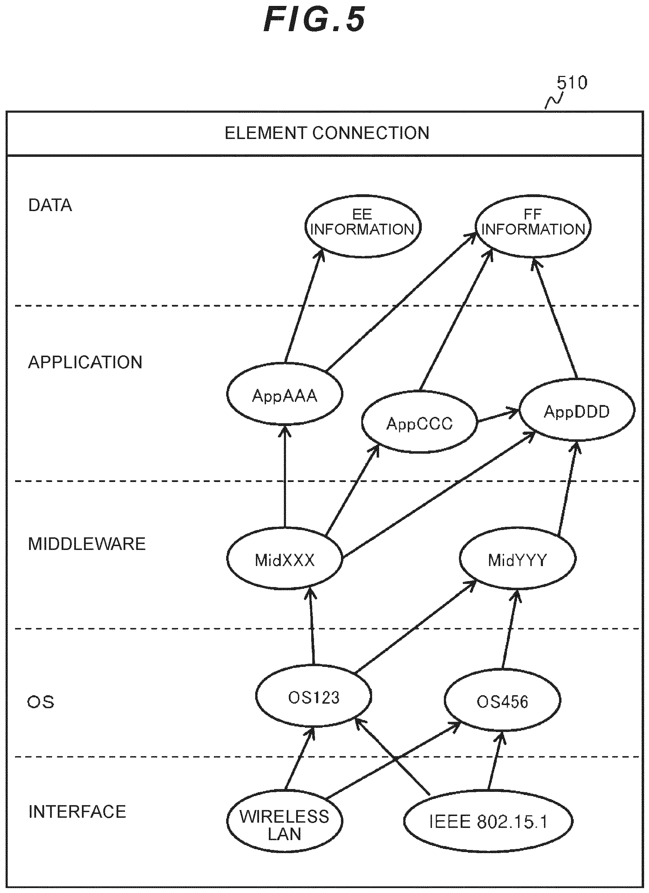

Fig. 5 is a diagram showing an example of the element connection 510. The element connection 510 is information indicating the connection, or coupling, of the respective constituent elements shown in Fig. 4. In Fig. 5, an element name is indicated for each hierarchy in the same manner as Fig. 4. Moreover, the positions where the hierarchy are indicated are also the same as Fig. 4, and, as the constituent element is closer to the top of the diagram, such constituent element is closer to the inside of the test scenario generation device 1, and, as the constituent element is closer to the bottom of the diagram, such constituent element is closer to the outside of the test scenario generation device 1.

The unidirectional arrow in Fig. 5 shows that access is possible in the direction of the arrow. To put it differently, access between elements with no arrow is not possible. For example, "Mid XXX" and "Mid YYY" are indicated in the hierarchy of "middleware". "Mid XXX" can access any one of "App AAA", "App CCC", and "App DDD" that exist in the hierarchy of "application". Nevertheless, "Mid YYY' can only access "App AAA".

Moreover, according to the example of Fig. 5, as the routes that reach "EE information", there are the following two routes; namely, the route from "wireless LAN", "OS 123", "Mid XXX", "App AAA", to "EE information", and the route from "IEE E802.15.1", "OS 123", "Mid XXX", "App AAA", to "EE information", in order from the interface to the inner side.

### (Vulnerability information 600)

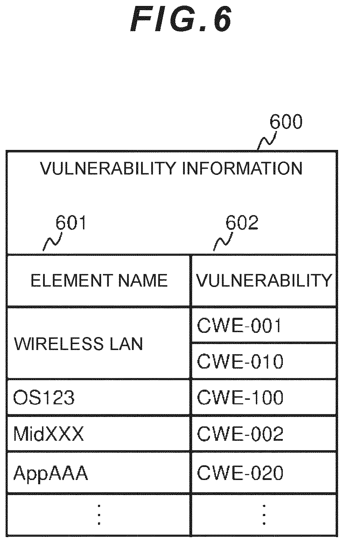

Fig. 6 is a diagram showing an example of the vulnerability information 600. The vulnerability information 600 is created by the administrator and stored in the storage unit 40 in advance. The vulnerability information 600 is configured from a plurality of records, and each record has the fields of element name 601 and vulnerability 602. The element name 601 is the name of the constituent element as with the element name 502 of the hierarchy information 500. In other words, the hierarchy information 500 and the vulnerability information 600 are linked based on the values of the element name 502 and the vulnerability 602. The vulnerability 602 is, for example, a CWE number that categorized the vulnerability, or a CVE number that numbered the vulnerability information discovered in the past, or a proper name of the vulnerability.

The vulnerability information is information related to defects in the software in terms of information security, and is also referred to as a security hole. There may be cases where the vulnerability information is distributed, for example, from a server of an organization that is publicly announcing security knowledge. In this embodiment, the distribution source of the vulnerability information is irrelevant. The vulnerability information 600, for example, is input to the test scenario generation device 1 via the input/output unit 230 or the communication unit 240 by the administrator selecting and acquiring information related to its own product from an external distribution server of vulnerability information. However, the administrator may also independently create the vulnerability information based on one's own know-how. Moreover, the test scenario generation device 1 may also be configured to automatically acquire information from an external distribution server of vulnerability information via the communication unit 240.

### (Attack classification information 700)

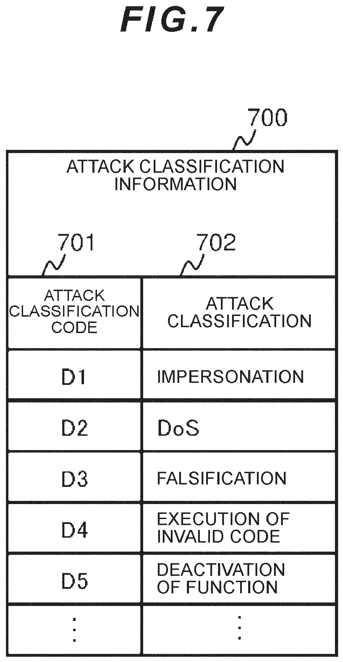

Fig. 7 is a diagram showing an example of the attack classification information 700. The attack classification information 700 is created by the administrator and stored in the storage unit 40 in advance.

The attack classification information 700 includes a column of an attack classification code 701 which stores an identifier for identifying the type of attack, and a column of an attack classification information 702 which stores information indicating the classification of the attack related to security. In this embodiment, because a number is used as the identifier for identifying the type of attack, a number is stored in the attack classification code 701.

### (Vulnerability countermeasure information 710)

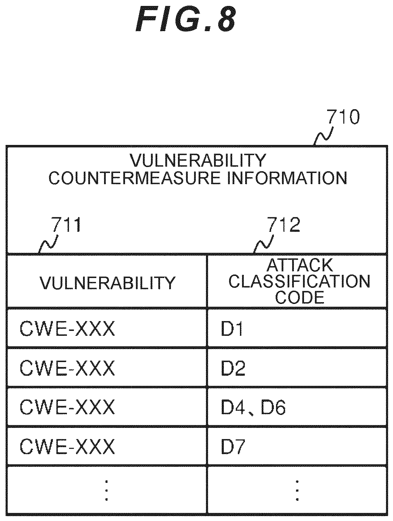

Fig. 8 is a diagram showing an example of the vulnerability countermeasure information 710. The vulnerability countermeasure information 710 is created by the administrator and stored in the storage unit 40 in advance. The vulnerability countermeasure information 710 is configured from a plurality of records. Each record of the vulnerability countermeasure information 710 has the fields of vulnerability information 711 which stores information indicating the vulnerability, and attack classification information 712 which stores information indicating the classification of the attack related to security.

The vulnerability information 711 stores, for example, a CWE number that categorized the vulnerability, or a CVE number that numbered the vulnerability information discovered in the past, or a proper name of the vulnerability. In order to use a correspondence relation in the subsequent processing, it is desirable that the vulnerability information 711 stores information of the same type as the vulnerability 602 of the vulnerability information 600. When information of a different type than the vulnerability 602 is stored in the vulnerability information 711, a correspondence table or the like is created as needed so as to clarify the correspondence relation of the vulnerability information 711 and the vulnerability 602.

The attack classification information 712 stores information indicating the classification of the attack that may occur when the vulnerability information of that line exists among the attack classification information 702 of the attack classification information 700. In Fig. 8, while the attack classification information 712 stores the value of the field of the attack classification code 701, it will suffice so as long as the classification of the attack that may occur based on the vulnerability information can be identified, and there is no limitation in the method of expression thereof.

The vulnerability countermeasure information 710 may be created based on the know-how of the administrator or developer. Moreover, the vulnerability countermeasure information 710 may also be created by aggregating the information of vulnerability distributed by the vulnerability distribution server described above and the information of the attacks that actually occurred due to that vulnerability.

### (Scenario pattern information 800)

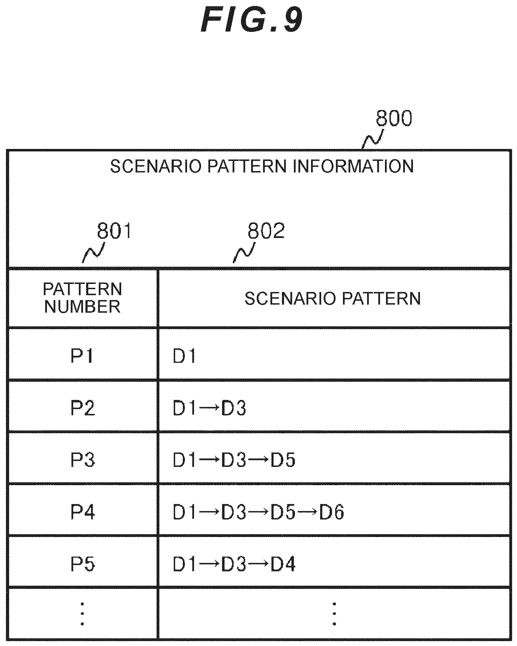

Fig. 9 is a diagram showing an example of the scenario pattern information 800. The scenario pattern information 800 is created by the administrator and stored in the storage unit 40 in advance.

The scenario pattern information 800 is configured from a plurality of records. Each record of the scenario pattern information 800 has the fields of pattern number 801 which stores the pattern number for uniquely identifying a pattern, and scenario pattern 802 which stores the execution order of the attack method up to the attack damaging the assets. The scenario pattern 802 stores the order of the attacks expressed using the attack classification stored in the attack classification information 700.

For example, with the first record of Fig. 9, the pattern number 801 is "P1", and the scenario pattern 802 is "D1". This record indicates a pattern in which the assets will be damaged solely by the attack of "impersonation" corresponding to "(1)" of the attack classification code 701 shown in Fig. 7. With the second record of the scenario pattern information 800, the pattern number 801 is "P2", and the scenario pattern 802 is "D1 → D2". This record indicates a pattern in which the assets will be damaged by the attack of "impersonation" corresponding to "D1" of the attack classification code 701 shown in Fig. 7, and subsequently damaged by the attack of "falsification" corresponding to "D3".

As attacks related to security, there are, for example, an attack that is delivered at the entry point of the product, an attack that is delivered as a foothold to make the next attack easier within the product, and an attack that is delivered directly to the assets by destroying, stealing or stopping the assets as indicated with the cyber kill chain. Moreover, there are attacks that have multiple influences. An attacker delivers an attack in one or more combinations of different attacks that affect the product. However, with an attack based a combination of multiple attacks, the combination patterns of the attack can be limited based on the type of attack that affects the product. The combination patterns of that attack are stored in the scenario pattern 802.

The scenario pattern information 800 can be created based on the know-how of security experts, administrators or developers. Moreover, the scenario pattern information 800 may also be created by aggregating the information of attacks that actually occurred which is distributed by the vulnerability distribution server described above, and referring to the aggregated data. Furthermore, the scenario pattern information 800 may also be created based on information of CAPAC which categorizes the information related to security attacks.

### (Attack classification information 900)

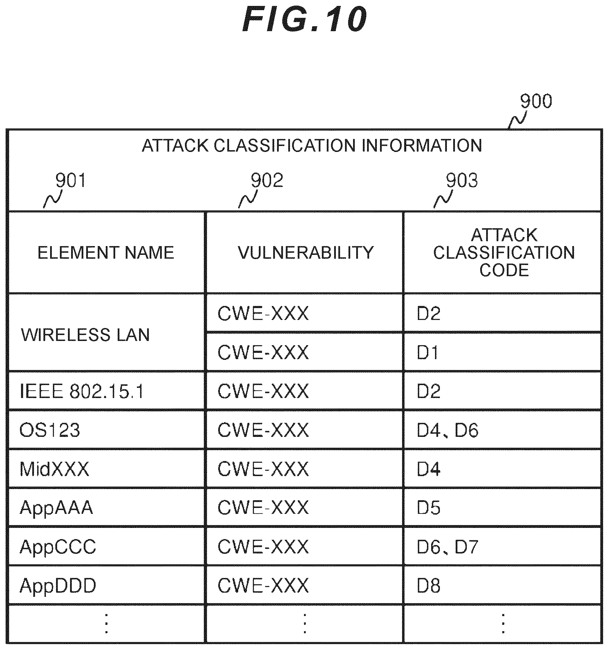

Fig. 10 is a diagram showing an example of the attack classification information 900. The attack classification information 900 is created by the assignment unit 21, and stored in the storage unit 40. The attack classification information 900 is configured from a plurality of records, and each record as the fields of element name 901, vulnerability 902, and attack classification code 903.

The element name 901 stores information indicating the constituent elements configuring the evaluation target. The vulnerability 902 stores information indicating the vulnerability that may be contained in the constituent elements. The attack classification code 903 stores information indicating the classification of attacks related to security that may occur due to the vulnerability.

The element name 901 stores all values stored in the element name 502 of the hierarchy information 500. However, the order indicated in the element name 901 does not need to be the same as the hierarchy information 500. The vulnerability 902 and the attack classification code 903 store the vulnerability information and the attack classification corresponding to the element name 901 of each record by referring to the vulnerability information 600 and the vulnerability countermeasure information 710.

### (Attack route information 1100)

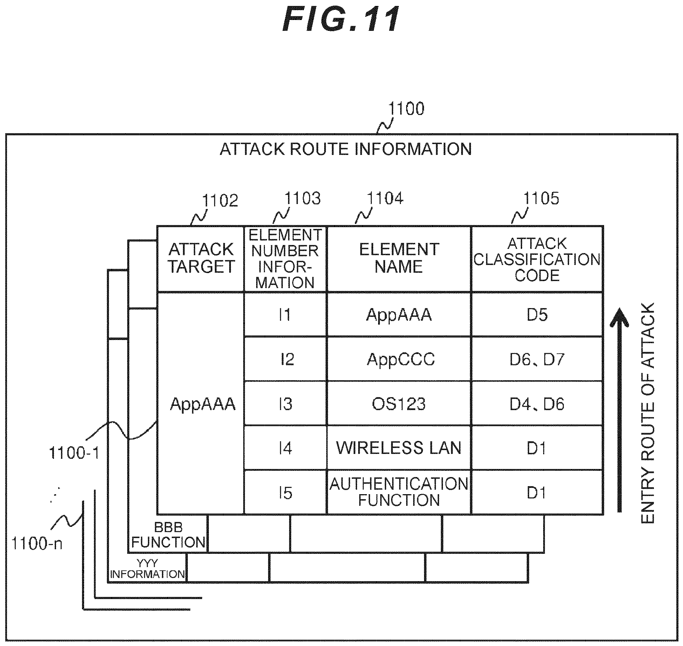

Fig. 11 is a diagram showing an example of the attack route information 1100. The attack route information 1100 is created by the route creation unit 22 and stored in the storage unit 40. In the example shown in Fig. 11, the attack route information 1100 is created as a separate table for each asset that may be attacked. The attack route information 1100 is configured from a plurality of records, and each record has the fields of attack target 1102, element number 1103, element name 1104, and attack classification code 1105. The attack target 1102 stores information indicating the assets that may become the target of an attack that causes damage; to put it differently, assets that may become the target of the final attack, in one table. The element number 1103 stores a number for uniquely identifying the constituent elements of the created attack route. The element name 1104 stores the element name that may become the target of attack in the record. The attack classification code 1105 stores the classification of the attacks in the record.

The attack route information 1100 is generated at least in a number of the constituent elements which are set as the assets in the asset correspondence 503 of the hierarchy information 500 of Fig. 4. When a plurality of attack routes are anticipated against one asset information, they may be collectively indicated in one table so that each route is identifiable, or a plurality of tables may be created for the same asset information. In the example of Fig. 11, a plurality of attack routes are anticipated, but collectively indicated in one table.

The records and their arrangement order in the respective tables of Fig. 11 indicate that, as the constituent element is shown lower in the diagram, it is near the entry point, and as the constituent element is shown higher in the diagram, it is more on the inner side. In other words, the attack advances from the bottom toward the top in the diagram. However, the order of this indication may be reversed, or a field for separately storing information specifying the order of entry may be provided to each record.

### (Test scenario output result 1200)

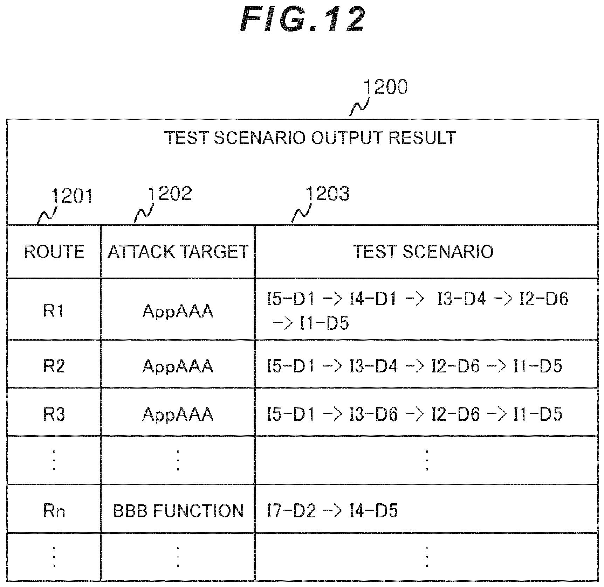

Fig. 12 is a diagram showing an example of the test scenario output result 1200. The test scenario output result 1200 is created by the scenario creation unit 23 and stored in the test scenario holding unit 46.

The test scenario output result 1200 is configured from a plurality of records, and each record has the fields of route 1201, attack target 1202, and test scenario 1203. The field of the route 1201 stores information for uniquely identifying the test scenario.

The attack target 1202 stores information indicating the assets to become the target of attack based on the test scenario. The test scenario 1203 stores information of the test scenario created by the scenario creation unit 23.

In this embodiment, while the test scenarios created against the evaluation target are expressed in the form of one table, the test scenarios may also be expressed as a separate table for each attack target. Moreover, the test scenario output result 1200 may be displayed as an output result screen on the output device of the administrator terminal 2, or output to paper as a report from the administrator terminal 2 or the test scenario generation device 1.

Note that, while this embodiment illustrates a case of outputting the attack target and the test scenario information, the vulnerability information corresponding to the scenario may also be output together. Moreover, the method of expression of the test scenario may be based on abbreviated codes such as in this embodiment, or the expression may be based on a specific constituent element name or attack classification name, or description of the attack, and there is no limitation regarding the method of expression thereof. For example, "I5-D1 → I3-D4 → I2-D6 → I1-D5" of this embodiment may also be expressed as "AAA function is deactivated as a result of authentication function being accessed without authorization, invalid code being executed by OS 123, and setting of CCC being changed".

### (Test scenario priority evaluation result 1300)

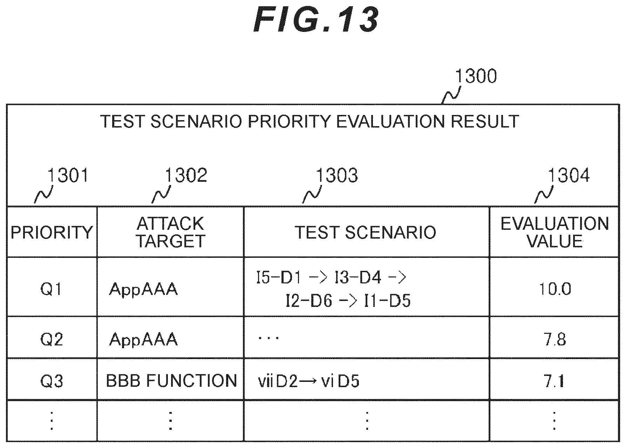

Fig. 13 is a diagram showing an example of the test scenario priority evaluation result 1300. The test scenario priority evaluation result 1300 is created by the risk evaluation unit 24 and stored in the storage unit 40.

The test scenario priority evaluation result 1300 is configured from a plurality of records, and each record has the fields of priority 1301, attack target 1302, test scenario 1303, and evaluation value 1304. The priority 1301 stores information indicating the priority of the test scenario. The attack target 1302 stores information indicating the assets to become the target of attack when the test scenario is implemented. The test scenario 1303 stores information of the test scenario created by the scenario creation unit 23. The evaluation value 1304 stores the evaluation value of the test scenario calculated by the risk evaluation unit 24.

The calculation method of the evaluation value by the risk evaluation unit 24 is not limited to a specific calculation method so as long as it is a method capable of assigning a priority of the test scenario and, for example, the following five methods may be considered. First, a method of evaluating the merits and demerits of the number of constituent elements (number of pops) configuring the test scenario. Second, a method of expressing, as a coefficient, the size of the value of the asset information as of the hierarchy information 500 in advance and then evaluating the size of value of the asset. Third, a method of expressing, as a coefficient, the level of influence of the attack classification in the attack classification information 700 and then performing the evaluation. Fourth, a method of performing evaluation by multiplying the level of influence of the attack classification and the size of the value of the assets. Fifth, a method of aggregating the information of attacks that actually occurred which was distributed from the vulnerability distribution server described above and the risk value (for example, CRSS value) of such attack, creating average risk value information in the combination of constituent elements and attack classification, and then performing the evaluation.

Moreover, it is also possible to prepare a plurality of calculation methods of the evaluation value by the risk evaluation unit 24, allow the administrator to select the calculation method, and have the administrator compare the priority of the respective test scenarios prepared by the selected calculation method. In the foregoing case, this method can be used upon preparing a quote for the test design or providing an explanation to the customer.

### (Redundant test scenario determination result 1400)

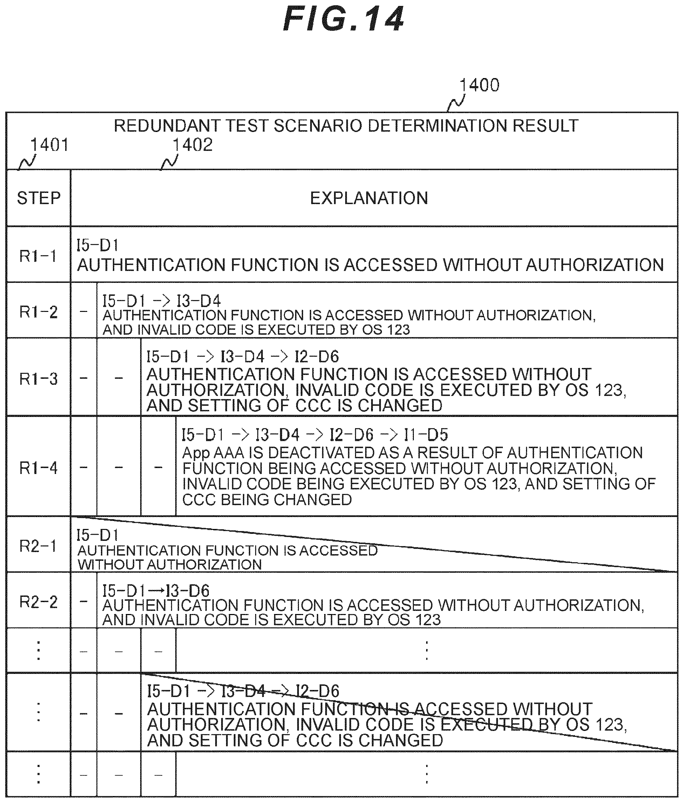

Fig. 14 is a diagram showing an example of the redundant test scenario determination result 1400. The redundant test scenario determination result 1400 is created by the redundant scenario determination unit 25 and stored in the storage unit 40. The redundant test scenario determination result 1400 is configured from a plurality of records, and each record includes a step 1401 which stores information for uniquely identifying one step of each test scenario, and an explanation 1402 which stores the explanation of each step of the test scenario created by the scenario creation unit 23.

The top half of the example shown in Fig. 14 explains the test scenario of a route R1 shown in Fig. 12. "R1-1" stored in step 1401 of the record item of Fig. 14 indicates that it is the "1" st step of route "R1".

The explanation 1402 stores an expression obtained by dividing the connection of combinations of the constituent elements and the attack classification of one test scenario into multiple connections. By dividing the connection of combinations into multiple connections, it is possible to determine the section as the connection of combinations of the constituent elements and the attack classification that is the same as in another test scenario. For example, in Fig. 14, "I5-D1 → I3-D4 → I2-D6" exist in a plurality of test scenarios.

The redundant test scenario determination result 1400 is output so that the administrator can comprehend the section where the connection of combinations of the constituent elements and the attack classification overlaps. In the example shown in Fig. 14, a diagonal line has been added to an overlapping test scenario such as route "R2-1". With an overlapping section, so as long as it is possible to confirm that the security measure against an attack to that scenario is functioning even once, the test related to that section may be omitted, and tests of only the sections of a different test scenario; that is, tests related to the connection of combinations of different constituent elements and the attack classification, need to be conducted. Thus, based on the redundant test scenario determination result 1400, the test design workload of designing the same test can be reduced, and the effect of streamlining the tests can be obtained.

The redundant scenario determination unit 25, for example, divides the respective test scenarios indicated in the test scenario output result 1200 step by step, and stores the operation of each step in the explanation 1402. Here, the redundant scenario determination unit 25 refers to the attack classification information 700 and the attack route information 1100. When the redundant scenario determination unit 25 describes all steps of all routes in the explanation 1402, the redundant scenario determination unit 25 searches for overlapping descriptions, and adds a display, such as a diagonal line, to indicate such overlap to the descriptions appearing for the second time onward.

Note that, in the following explanation, the name of the field will be used as is upon referring to the values stored in the respective fields in order to simplify the descriptions. For example, in the example shown in Fig. 10, "wireless LAN" is a value stored in the field of the element name 901, in the following explanation, the element name 901 may be referred to as "wireless LAN".

### (Processing sequence)

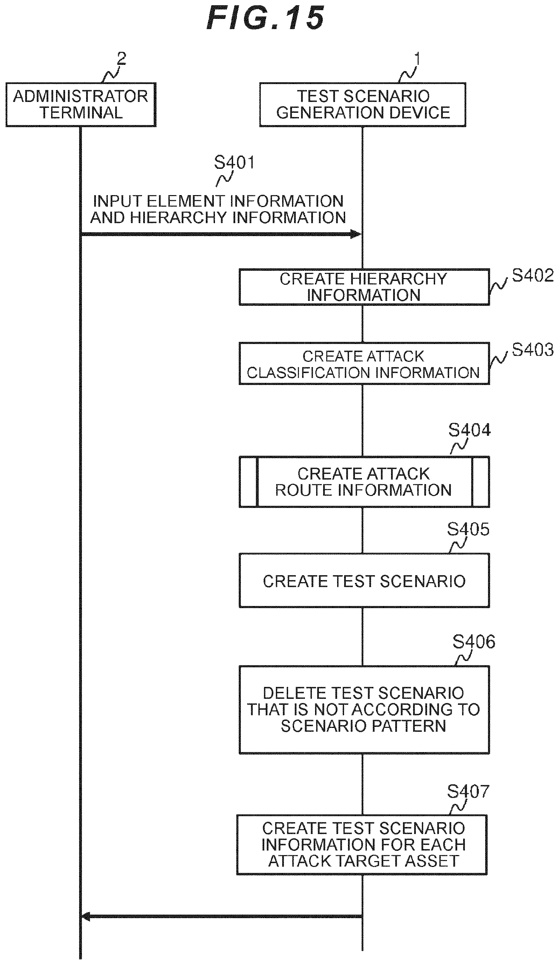

Fig. 15 is a processing sequence diagram of the test scenario generation device 1 and the administrator terminal 2. Note that the administrator terminal 2 may also be the configuration management DB 3.

In step S401, the administrator terminal 2 inputs the element name of the evaluation target, existence of the asset correspondence, and hierarchy to the test scenario generation device 1 via the input/output unit 60 or the communication unit 80. In step S402, the processing unit 20 of the test scenario generation device 1 uses the input information to create the hierarchy information 500, and stores the created hierarchy information 500 in the storage unit 40. In subsequent step S403, the assignment unit 21 of the test scenario generation device 1 creates the attack classification information 900 by using the hierarchy information 500, the vulnerability information 600, and the vulnerability countermeasure information 710. Specifically, the attack classification information 900 is created based on the following three stages. In the first stage, the assignment unit 21 assigns all element names 502 of the hierarchy information 500 to the element name 901 of the attack classification information 900. For example, in the example shown in Fig. 10, the element names 502 of Fig. 4 are transcribed to the element name 901 in random order.

In the second stage of step S403, the assignment unit 21 refers to the vulnerability information 600 and assigns, to the vulnerability 902, the vulnerability 602 corresponding to the element name 901 of the attack classification information 900. For example, in the first record of the example shown in Fig. 10, "CWE-001" and "CWE-010" as the vulnerability information corresponding to "wireless LAN" are assigned to the vulnerability 902. In the third stage, the assignment unit 21 refers to the vulnerability countermeasure information 710 and assigns, to the attack classification code 903, the attack classification information 712 corresponding to the vulnerability 902 of the attack classification information 900. The attack classification information 900 is created based on the foregoing processing.

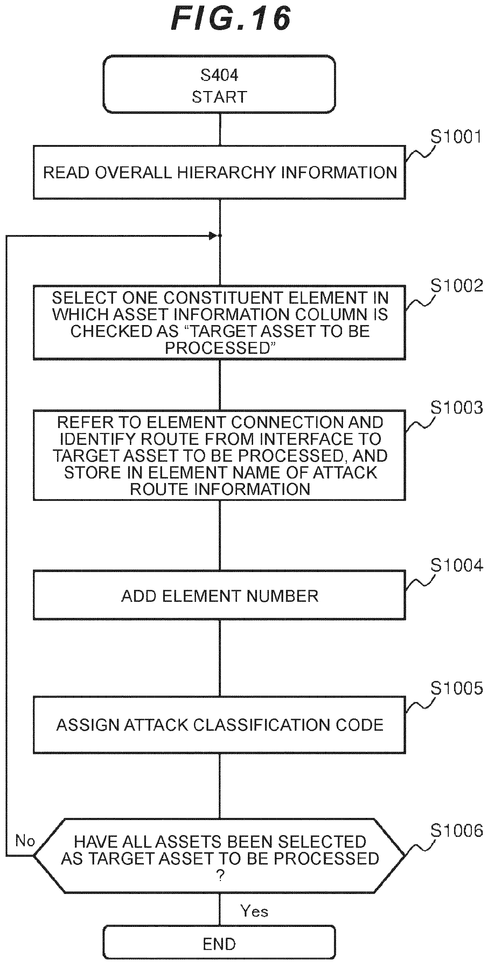

In subsequent step S403, the route creation unit 22 of the test scenario generation device 1 identifies the attack route from the interface to the assets by using the hierarchy information 500 and the element connection 510. Subsequently, the route creation unit 22 creates the attack route information 1100 by assigning, to the created attack route, the attack classification information against the created attack route by using the information stored in the attack classification information 900. The details of this step will be explained later with reference to Fig. 16.

In subsequent step S405, the scenario creation unit 23 of the test scenario generation device 1 refers to the attack route information 1100 and creates a plurality of test scenarios. The test scenarios are executed by performing the processing of the following three stages to the respective tables of the attack route information 1100 created in step 404. The order of tables to be selected as the processing target may be any order.

In the first stage of step S405, the scenario creation unit 23 acquires and combines the element number information 1103 and the attack classification code 1105 in the line that is closest to the entry of the entry order of attack in the table of the processing targets of the attack route information 1100. For example, in the example shown in Fig. 11, "I5" and "D1" are combined to obtain "I5-D1". However, while "-" (hyphen) is inserted between the two that were combined to ensure visibility, this hyphen may be omitted.

In the second stage of step S405, the scenario creation unit 23 similarly acquires the element number information 1103 and the attack classification code 1105 of the subsequent line of the entry order, and connects the combination thereof with the combination of the first stage. For example, in the example shown in Fig. 11, "I4" and "D1" are combined to obtain "I4-D1" and, by connecting it to "I5-D1", "I5-D1 → I4-D1" is obtained. However, while a rightward arrow is used here to show the order, an arbitrary delimiter such as a comma, semicolon or slash may also be used.

In the third stage of step S405, the scenario creation unit 23 repeats the processing of the second stage up to the exit side of the entry order; that is, up to the assets to become the target of attack. Note that, when a plurality of values are stored in the attack classification code 1105, element numbers are combined in the same number as the attack classifications indicated in the table. For example, in the example shown in Fig. 11, "I3-D4" and "I3-D6" are respectively created. Moreover, in the respective lines of the attack route information 1100, when an attack of the attack classification information will not occur in that line, such line is skipped, and connected to the combination of the element number information 1103 of the next line and the attack classification code 1105.

Based on the first stage to the third stage described above, the test scenarios of all combinations of the element number information and the attack classification information described in the attack route information 1100 are created. As described above, the foregoing processing is repeated for each table included in the attack route information 1100; that is, for each attack target, and test scenarios are created for all attack targets.

In subsequent step S406, the scenario creation unit 23 of the test scenario generation device 1 determines whether the order of the attack classification code of the test scenarios created in step 405 coincides with any pattern of the scenario pattern information 800. However, here, only the attack classification code 1105 of the test scenarios is given attention, and the element number information 1103 is ignored. For example, the test scenario of "I5-D1 → I3-D4 → I2-D6 → I1-D5" is determined as coinciding with the pattern of "D1 → D4 → D6 → D5". When the scenario creation unit 23 determines that a test scenario does not coincide with any pattern, it deletes that test scenario.

In subsequent step S407, the scenario creation unit 23 of the test scenario generation device 1 assigns the test scenario created in step S405, and which was not deleted in step S406, as the test scenario 1203 of the test scenario output result 1200. Subsequently, the scenario creation unit 23 stores the attack target 1202 corresponding to each test scenario and stores an arbitrary character string; for example, a serial number which starts from "R1", in the route 1201 as the code for uniquely identifying each test scenario. The test scenario output result 1200 is created based on the foregoing process.

In subsequent step S408, the scenario creation unit 23 outputs the test scenario output result 1200 created in step S407 to the administrator terminal 2. This concludes the explanation of Fig. 15.

### (Creation of attack route information)

Fig. 16 is a flowchart showing the attack route creation processing of the test scenario generation device 1; that is, the details of step S404 of Fig. 15. The route creation unit 22 of the test scenario generation device 1 creates the attack route information 1100 for each asset as the attack target by executing the processing shown in Fig. 16. The execution subject of each step described below is the route creation unit 22 of the test scenario generation device 1.

In step S1001, the route creation unit 22 reads the overall hierarchy information 500. In subsequent step S1002, the route creation unit 22 selects one element name 502 from the hierarchy information 500 in which the asset correspondence 503 is "YES". The element name 502 selected here becomes the asset as the attack target in the attack route information 1100, and is stored in the attack target 1102. In the following explanation, the constituent element selected in step S1002 is referred to the "processing target asset".

In step S1003, the route creation unit 22 refers to the element connection 510, identifies the route from the interface to the constituent elements as the assets selected in step 1002; that is, the order of the constituent elements, and stores the identified route in the element name 1104 of the attack route information 1100. In this embodiment, the asset as the attack target is placed in the top line, and the constituent element of the hierarchy of the interface is placed in the bottom line.

In step S1004, the route creation unit 22 assigns an element number, which is used for identifying the constituent elements according to that order, to the constituent element group aligned in step 1003, and stores the assigned element number in the element number information 1103 of the attack route information 1100. In step S1005, the route creation unit 22 refers to the element name 901 and the attack classification code 903 of the attack classification information 900, and assigns the corresponding attack classification code 1105 to the element name 1104.

In step S1006, the route creation unit 22 determines whether all assets in the hierarchy information 500 have been set as the processing target asset. The route creation unit 22 ends the processing shown in Fig. 16 upon determining that all assets have been set as the processing target asset, and returns to step S1002 upon determining that there is an asset that has not yet been set as the processing target asset. This concludes the explanation of the processing shown in Fig. 16.

According to the embodiment explained above, the following effects are obtained.
(1) A test scenario generation device 1 generates a test scenario related to an attack against an in-vehicle device. The test scenario generation device 1 comprises a storage unit 40 which stores hierarchy information 500 including information indicating a plurality of constituent elements equipped in the in-vehicle device and, among the constituent elements, assets that may become an attack target, an element connection 510 which indicates a connection of the constituent elements, vulnerability information 600 indicating a vulnerability of each of the constituent elements, and attack classification information 700 which indicates an attack classification of each of the vulnerabilities, an assignment unit 21 which creates attack classification information 900, which has identified the attack classification of each of the constituent elements, by using the hierarchy information 500, the vulnerability information 600, and the attack classification information 700, and a scenario creation unit 23 which generates an entry route up to each of the constituent elements as the assets based on the element connection 510, and generates a plurality of test scenarios in which a combination of the constituent elements and the attack classification is arranged in an order of the entry routes by using the attack classification information 900. Thus, it is possible to create exhaustive test cases that are compatible with attacks which combine the vulnerability of configurations and functions. According to this embodiment, it is possible to exhaustively create test scenarios that give consideration to the attack route of the product, and create test scenarios related to attacks which combine the connection and vulnerability of the constituent elements by giving consideration to the vulnerability information and the attack classification information of the constituent elements.
(2) The storage unit 40 stores scenario pattern information 800 indicating an order in which the attack classification is executed. The scenario creation unit 23 extracts only a test scenario corresponding to the scenario pattern information among the test scenarios obtained by generating all entry routes to the constituent elements as the assets based on the element connection 510. Thus, it is possible to create realistic test scenarios by giving consideration to the order of attack for each classification.
(3) The test scenario generation device 1 comprises a risk evaluation unit 24 which determines a priority of each of the test scenarios generated by the scenario creation unit 23. Thus, the relative merits of the test scenarios can be presented to the user.
(4) The test scenario generation device 1 comprises a redundant scenario determination unit 25 which detects a test scenario, among the plurality of test scenarios generated by the scenario creation unit 23, in which a combination of the constituent elements and the attack classification at least partially overlaps from the entry point. Thus, a part of the overlapping test scenarios can be presented to the user.

( 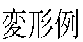 1) In the foregoing embodiment, the administrator terminal 2 was connected to the test scenario generation device 1. Nevertheless, the test scenario generation device 1 may also be configured such that it is connected to the configuration management DB 3 and outputs the output result from the output unit of the test scenario generation device. Moreover, the configuration may also be such that the functions can be carried out only with the test scenario generation device 1. Furthermore, information may be acquired by directly connecting the test scenario generation device 1 to the evaluation target.
( 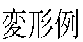 2) Instead of comprising the communication device 305, the input device 306, the output device 307, and the reading device 308, the test scenario generation device 1 may comprise an interface of each of such devices. For example, rather than comprising the output device 307 itself, the test scenario generation device 1 may comprise a video signal output circuit and a video signal output terminal for outputting video signals to a liquid crystal display.
( 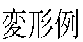 3) The vulnerability information 600 stores information of specific vulnerabilities that were known. Nevertheless, in substitute for information of specific vulnerabilities, vulnerabilities may also be used as the trend for each function or configuration.

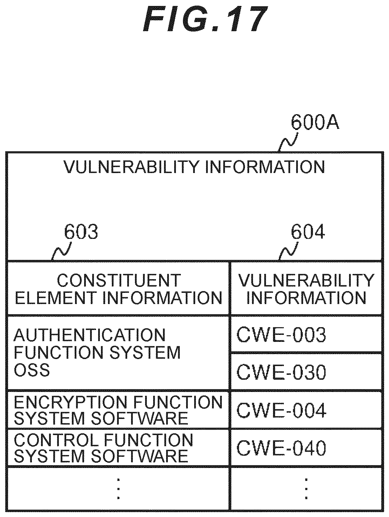

   Fig. 17 is a diagram showing an example of the vulnerability information 600A in modified example 3. The vulnerability information 600A includes constituent element information 603 which stores information indicating the category of the constituent elements, and vulnerability information 604 which stores information indicating the vulnerability that tends to be contained in the category of the corresponding constituent element. The information stored in the constituent element information 603 is, for example, information related to the constituent elements such as the product classification name, software classification name, function type name configuring the software, function category name, function trend, or element technology name. The information stored in the vulnerability information 604 may be, for example, a CWE number that categorized the vulnerability, or a CVE number that numbered the vulnerability information discovered in the past, or a proper name of the vulnerability as with the vulnerability 602.
   According to this modified example, because the classification/function category of the constituent elements and the vulnerability information are associated, even in cases where the names of the constituent elements are not a complete match, it is possible to create the test scenarios by inferring the existence of vulnerabilities. Note that, in addition to substituting the vulnerability information 600A of this modified example with the vulnerability information 600 of the foregoing embodiment, the two may also be used in combination.
( 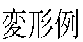 4) The test scenario generation device 1 does not need to comprise the scenario pattern information 800, and may output an exhaustive combination of scenario patterns without giving consideration to the scenario patterns.

In each of the embodiments and modified examples explained above, the configuration of the functional blocks is merely an example. Several of the functional configurations indicated as separate functional blocks may be configured integrally, and the configuration represented as one functional block diagram may be divided into two or more functions. Moreover, the configuration may also be that a part of the function of each functional block is equipped in the other functional blocks. Furthermore, a part or all of the functions realized by the programs may be realized with a hardware circuit or FPGA.

The embodiments and modified examples described above may be combined. While various embodiments and modified examples have been described above, the present invention is not limited thereto. Other embodiments conceivable within the scope of the technical concept of the present invention also fall within the scope of the present invention.

### REFERENCE SIGNS LIST

- 1: test scenario generation device
- 20: processing unit
- 21: assignment unit
- 22: route creation unit
- 23: scenario creation unit
- 24: risk evaluation unit
- 25: redundant scenario determination unit
- 40: storage unit
- 500: hierarchy information
- 510: element connection
- 600: vulnerability information
- 700: attack classification information
- 800: scenario pattern information
- 900: attack classification information
- 1100: attack route information

## Claims

1. A test scenario generation device which generates a test scenario related to an attack against an in-vehicle device, comprising:
a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities;
an assignment unit which creates attack classification information, which has identified the attack classification of each of the constituent elements, by using the hierarchy information, the vulnerability information, and the attack classification information; and
a scenario creation unit which generates an entry route up to each of the constituent elements as the assets based on the element connection, and generates a plurality of test scenarios in which a combination of the constituent elements and the attack classification is arranged in an order of the entry routes by using the attack classification information.

2. The test scenario generation device according to claim 1,
wherein the storage unit additionally stores scenario pattern information indicating an order in which the attack classification is executed, and
wherein the scenario creation unit extracts only a test scenario corresponding to the scenario pattern information among the test scenarios obtained by generating all entry routes to the constituent elements as the assets based on the element connection.

3. The test scenario generation device according to claim 1or 2, further comprising:
a risk evaluation unit which determines a priority of each of the test scenarios generated by the scenario creation unit.

4. The test scenario generation device according to any one of claims 1 to 3, further comprising:
a redundant scenario determination unit which detects a test scenario, among the plurality of test scenarios generated by the scenario creation unit, in which a combination of the constituent elements and the attack classification at least partially overlaps from the entry point.

5. A test scenario generation method in which a test scenario generation device comprising a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities generates a test scenario related to an attack against the in-vehicle device, comprising the steps of:
creating the attack classification information, which has identified the attack classification of each of the constituent elements, by using the hierarchy information, the vulnerability information, and the attack classification information; and
generating an entry route up to each of the constituent elements as the assets based on the element connection, and generating a plurality of test scenarios in which a combination of the constituent elements and the attack classification is arranged in an order of the entry routes by using the attack classification information.

6. The test scenario generation method according to claim 5,
wherein the storage unit additionally stores scenario pattern information indicating an order in which the attack classification is executed, and
wherein only a test scenario corresponding to the scenario pattern information is extracted among the test scenarios obtained by generating all entry routes to the constituent elements as the assets based on the element connection.

7. The test scenario generation method according to claim 5 or 6,
wherein a priority of each of the generated test scenarios is determined.

8. The test scenario generation method according to any one of claims 5 to 7, further comprising the step of:
detecting a test scenario, among the plurality of generated test scenarios, in which a combination of the constituent elements and the attack classification at least partially overlaps from the entry point.

9. A test scenario generation program which causes a test scenario generation device comprising a storage unit which stores hierarchy information including information indicating a plurality of constituent elements equipped in the in-vehicle device and, among the constituent elements, assets that may become an attack target, an element connection which indicates a connection of the constituent elements, vulnerability information which indicates a vulnerability of each of the constituent elements, and attack classification information which indicates an attack classification of each of the vulnerabilities to generate a test scenario related to an attack against the in-vehicle device,
wherein the test scenario generation program causes the test scenario generation device to:
create the attack classification information, which has identified the attack classification of each of the constituent elements, by using the hierarchy information, the vulnerability information, and the attack classification information; and
generate an entry route up to each of the constituent elements as the assets based on the element connection, and generate a plurality of test scenarios in which a combination of the constituent elements and the attack classification is arranged in an order of the entry routes by using the attack classification information.

10. The test scenario generation program according to claim 9,
wherein the storage unit additionally stores scenario pattern information indicating an order in which the attack classification is executed, and
wherein only a test scenario corresponding to the scenario pattern information is extracted among the test scenarios obtained by generating all entry routes to the constituent elements as the assets based on the element connection.

11. The test scenario generation program according to claim 9 or 10,
wherein a priority of each of the generated test scenarios is determined.

12. The test scenario generation program according to any one of claims 9 to 11,
wherein a test scenario, among the plurality of generated test scenarios, in which a combination of the constituent elements and the attack classification at least partially overlaps from the entry point is detected.
